Europäisches Patentamt

European Patent Office

Office européen des brevets

Publication number: **0 383 946**

**A1**

# EUROPEAN PATENT APPLICATION
## published in accordance with Art. 158(3) EPC

Application number: 89909622.6

Int. Cl.5 **H04L 11/00, H04L 1/22**

Date of filing: 23.08.89

International application number:
**PCT/JP89/00861**

International publication number:
**WO 90/02457 (08.03.90 90/06)**

Priority: 24.08.88 JP 209868/88
21.09.88 JP 237263/88

Date of publication of application:
**29.08.90 Bulletin 90/35**

Designated Contracting States:
**DE FR GB IT**

Applicant: **KABUSHIKI KAISHA KOMATSU
SEISAKUSHO**
**3-6, Akasaka 2-chome**
**Minato-ku Tokyo 107(JP)**

Inventor: **NAKAYAMA, Miki**
**920, Itado Isehara-shi**
**kanagawa-ken 259-11(JP)**

Representative: **Selting, Günther, Dipl.-Ing. et
al**
**Patentanwälte von Kreisler, Selting, Werner**
**Deichmannhaus am Hauptbahnhof**
**D-5000 Köln 1(DE)**

## SERIES CONTROL APPARATUS.

A series control apparatus in which a plurality of nodes (10-1 to 10-n) to which a terminal (1 or 2) is connected and a main controller (100) for controlling this plurality of nodes (10-1 to 10-n) are connected in series, and each of the nodes, upon receipt of a frame signal from the main controller (100), picks up from the frame signal the output data sent to the terminal (1 or 2) connected to the node itself (10-1 to 10-n) and sends it to the terminal (1 or 2), and further sends the frame signal from which the output data has been picked up to the node (10-1 to 10-n) of a subsequent stage. The plurality of nodes (10-1 to 10-n) and the main controller (100) are connected in series using two signal lines (I, II) in order to detect missing frame signals on the two signal lines (I, II). The signal lines are switched depending upon the content that is detected prior to detecting breakage in the signal line, in order to prevent in advance the receipt of data from the signal line of the broken side.

FIG.2

D E S C R I P T I O N

SERIES CONTROL SYSTEM

TECHNICAL FIELD

This invention relates to a series control system which can be effectively applied to a collective control system for a press, machine tool, unmanned conveyor, etc, and more particularly to a countermeasure against the breaking of signal lines through which nodes are connected to one another.

BACKGROUND ART

For collective control of presses, machine tools, construction machines, airplanes, vessels, unmanned conveyors, unmanned warehouses, it is necessary to a number of sensors (such as limit switches, operating buttons and encoders) for detecting the conditions of various parts of such items, and a number of actuators for controlling the states of them. The number of sensors and actuators are more 3,000 in the case of the collective control of the presses for instance, and will be more for other devices.

In a conventional collective control system for collectively controlling devices of this type, the above-described number of sensors and actuators are connected to a main controller so that in response to the outputs of the number of sensors, the main controller applies signals to the number of actuators to control them.

In the case of the conventional collective control system,

1

as the numbers of sensors and actuators increases, the number of signal lines connecting the sensors and actuators to the main controller is also increased, and the main controller must have an input and output means which is considerably intricate.

In order to overcome this difficulty, an arrangement has been proposed in the art in which a plurality of nodes are connected in series, a single or plural sensors and a single or plural actuators are connected to each of the nodes, and those nodes are connected in the form of a loop through a main controller, so that all the nodes are controlled by signals provided by the main controller. In this arrangement, fundamentally the main controller has only a signal input line and a signal output line, and each node is connected to only the signal input line and the signal output line, with the result that number of wiring steps is greatly reduced.

In the case where the nodes are series-connected as was described above, it is rather difficult to collect the outputs of the sensors with concurrency and to control the actuators with concurrency. For instance an arrangement may be considered in which addresses are assigned to the nodes, respectively, and the nodes are controlled by using the addresses thus assigned. However, the system is still disadvantageous in that the delay of time attributing to the addressing causes another problem, and the concurrent collection of the outputs of the sensors and the concurrent control of the actuators cannot be obtained satisfactorily.

In view of the foregoing, the present inventors have aban-

2

doned the technical concept that addresses are assigned to the nodes which are connected in series. That is, the present inventors have proposed a series control system in which the nodes are identified from the order of connection of them, whereby the addressing is eliminated, the time of delay attributing to the addressing is also eliminated, and the nodes are greatly simplified in construction.

In the system, each node adds a signal received from its sensor signal to a signal received from the preceding node according to a predetermined rule, and extracts a predetermined signal from the signal received from the preceding node according to a predetermined rule. Therefore, in the system, it is unnecessary to assign addresses to the nodes, and therefore at each node the delay of time is considerably slight being caused only by a timing operation.

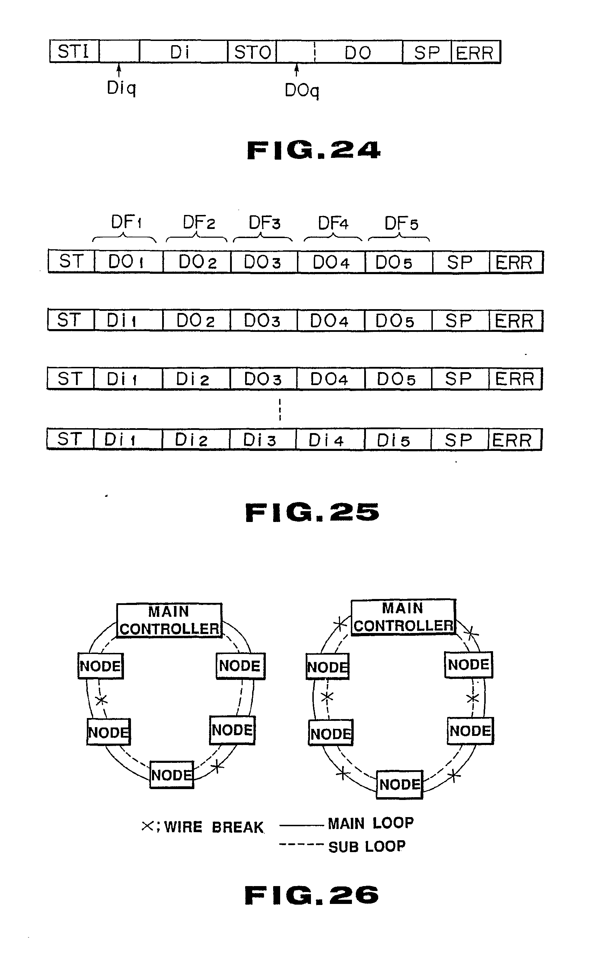

In the series control system, the nodes may be connected with only one signal line (loop). However, it is true that in order to prevent the occurrence of a so-called "system down" when the loop is broken, there is a strong demand for provision of another loop; that is, the system is modified into a double loop type series control system. That is, as shown in FIG. 26, a main loop and an auxiliary loop are provided, so that normally the main loop is used, and when it is broken, the auxiliary loop is used.

However, the conventional double loop type series control system is still disadvantageous in that, since it takes a relatively long period of time to detect the breaking of wire, the delay in operation during the detection greatly affects the

3

system, as a result the system may be stopped, or the machines or the like connected thereto may operate erroneously.

Furthermore, in the conventional system, normally the main loop is used, and monitored for the breaking of wire. Therefore, with the conventional system, when it is detected that the main loop has been broken, the main loop is switched over to the auxiliary loop, and then it is determined whether or not the auxiliary loop is broken. When it is detected that the auxiliary loop has been broken, too, an emergency stop instruction is issued to stop the system instantaneously. That is, in the conventional system, detection of the breaking of wire must be given to the two loops, and the delay during the detection may adversely affect the system, thus causing serious failures such as the damage of the machines or the like connected thereto.

Furthermore the conventional system in which the main loop is switched over to the auxiliary loop as was described above suffers from a difficulty that the "system down" occurs when the main loop is broken only at a point or the auxiliary loop is broken only at a point as shown in FIG. 26.

In view of the foregoing, an object of this invention is to provide a series control system high in reliability in which the possibility that the breaking of wire occurs with the loops is detected earlier than it occurs, so that, when it is determined that the possibility is high that the breaking of wire occurs with one of the two loops, the loop is switched over to the other loop without delay.

Another object of the invention is to provide a series

4

control system high in reliability in which communications is continued unless the two loops are broken between adjacent nodes.

DISCLOSURE OF THE INVENTION

The foregoing objects of the invention have been achieved by the provision a series control system in which a plurality of nodes each having at least a terminal and a main controller for controlling the plurality of nodes are connected in series to one another, and each node is so designed that, when the node receives from the preceding node a frame signal including output data for the terminals of the nodes which is outputted by the main controller with a predetermined period, the node extracts the output data from the frame signal which is provided for the terminal of the node, and applies the output data thus extracted to the terminal, and applies to the following node the frame signal from which the output data has been extracted; in which, according to a first aspect of the invention, he plurality of nodes and the main controller are series-connected with two signal lines, and each node comprises: first and second frame dropout detecting means which perform a detecting operation with respect to the two signal lines, respectively, in such a manner as to determine the occurrence of a frame dropout whenever the frame signal is not received through the signals lines for longer than the predetermined period; first and second wire break detecting means which perform a detecting operation with respect to the signal lines in such a manner as to determine the occurrence of the breaking of wire whenever the frame signal is not received through the signal line for a predetermined period of time longer than the predetermined period; and switching means which,

5

according to the detection signals of the first and second frame dropout detecting means and the first and second wire break detecting means, selects one of the two signal, inhibits the fetching of the output data.

With the system, in the case where the detection signals are outputted by both of the first and wire break detecting means, the fetching of the output data is inhibited, and in the other cases one of the two signal lines is selected according to the contents of the detection signals of the first and second frame dropout detecting means. The selection is so logically designed that the signal line lower in the possibility of the breaking of wire be selected by the switching means.

According to the invention, the nodes and the main controller are series-connected with the two signal lines, and the frame dropout with each signal line is detected, so that the signal lines are switched according to the results of detection. Accordingly, the probability of fetching the data from the signal line which has been broken is reduced, which contributes greatly to improvement of the reliability of the system.

Furthermore, the invention provides a series control system in which the plurality of nodes and the main controller are series-connected with two signal lines, and each node comprises: first and second wire break detecting means for detecting whether or not the two signal lines between the node and the preceding node are broken; wire break frame signal generating means for producing a predetermined wire break frame signal indicating the breaking of wire of the signal lines; and signal switching means

6

which, according to detection outputs of the first and second wire break detecting means, when none of the two signal wires are broken, transmits data frame signals received from the preceding node through the two signal lines to the corresponding two signal lines between the node and the following node, when one of the two signal wires is broken, transmits the data frame signal provided by the signal wire which is not broken to the two signal wires between the node and the following node, and when both of the two signal wires are broken, transmits the wire break frame signal thus formed to the two signal lines between the node and the following node.

With the arrangement, when only one of the two signal lines is broken, the signal from the other signal line is transmitted to the two signal lines between the present node and the following node; and therefore, communications can be continued unless the two signal lines are broken.

Furthermore, in the system, the nodes and the main controller are series-connected with the two signal lines, and signals are transmitted by using all the loops between the nodes which are free of the breaking of wire. Therefore, the "system down" will not readily be caused; that is, as for the breaking of wire, the system is high in reliability and in durability. When the breaking of wire occurs to stop the transmission of signals, the main controller is informed of it, so that repair work is carried out quickly.

## BRIEF DESCRIPTION OF THE DRAWINGS

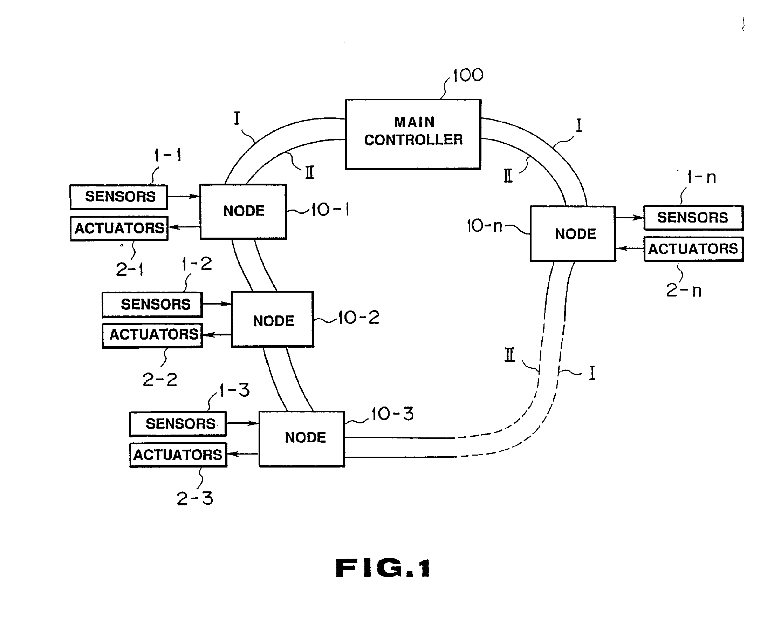

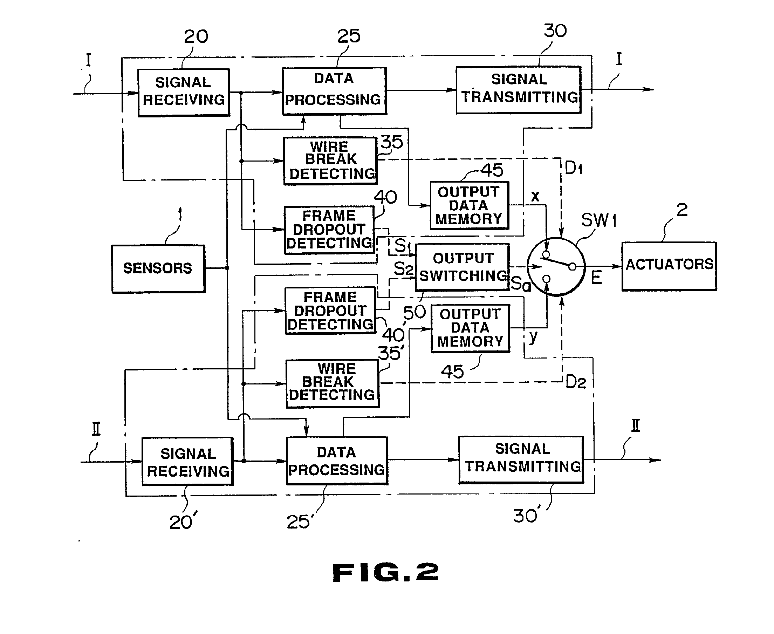

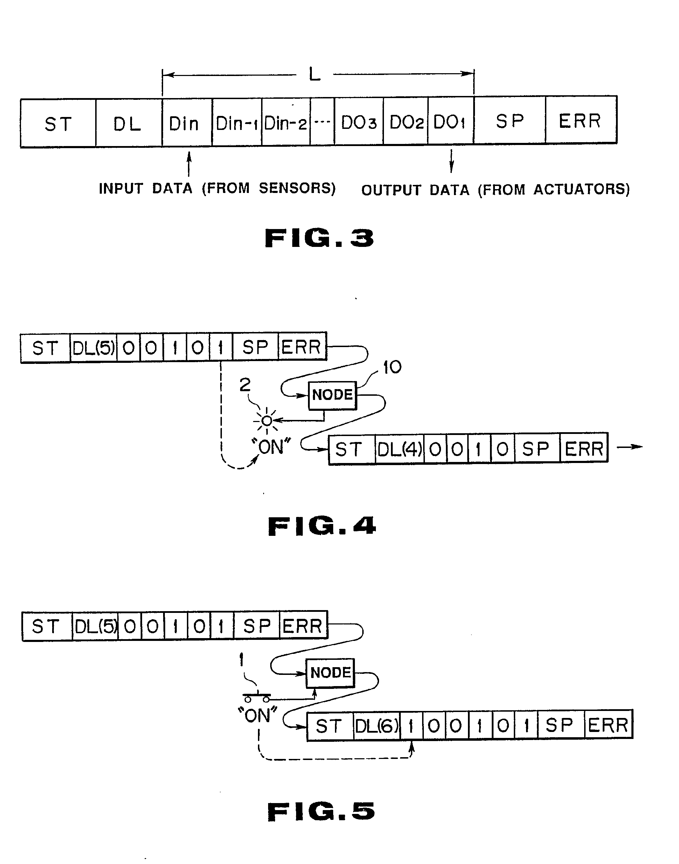

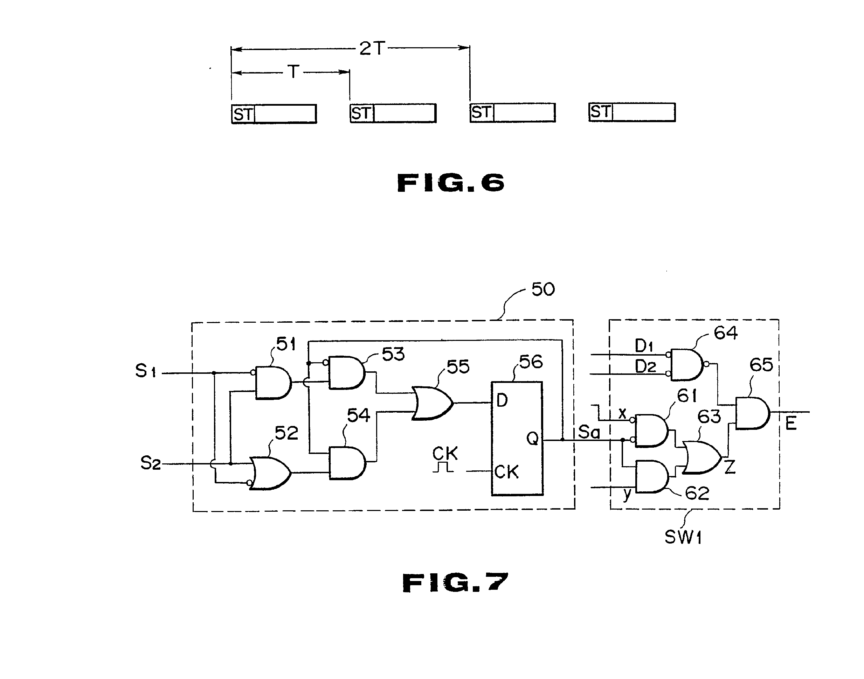

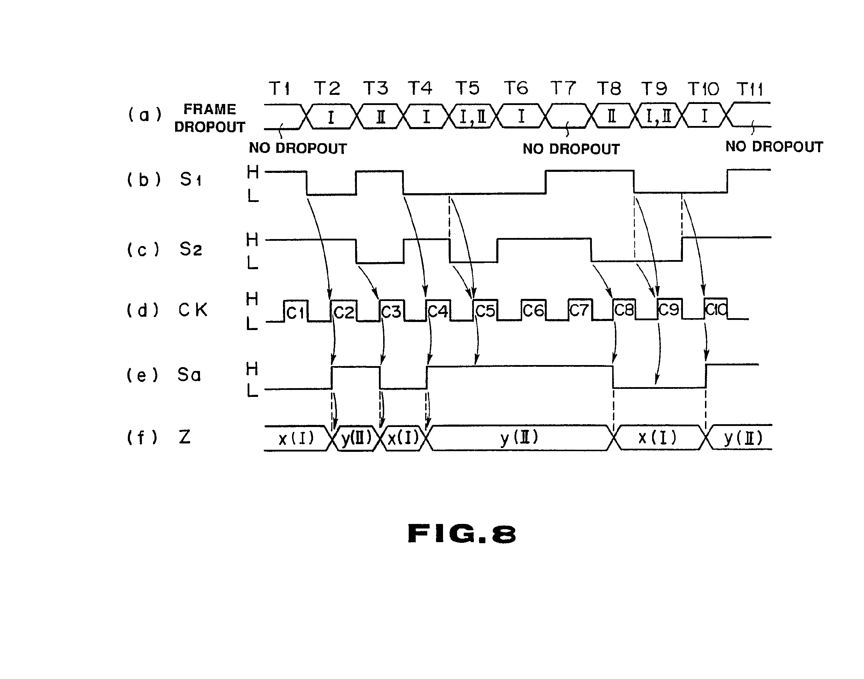

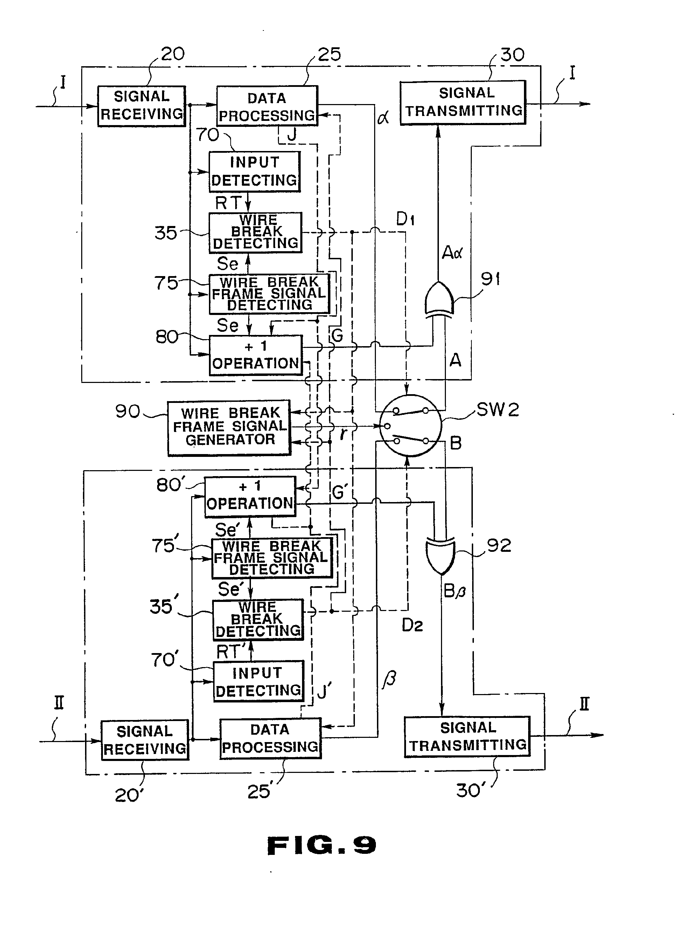

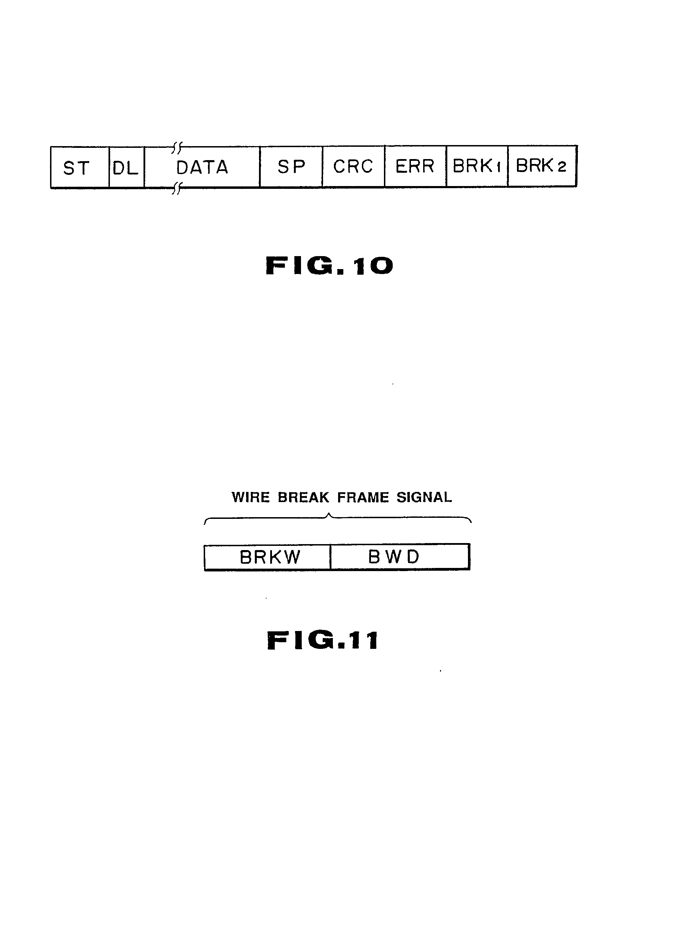

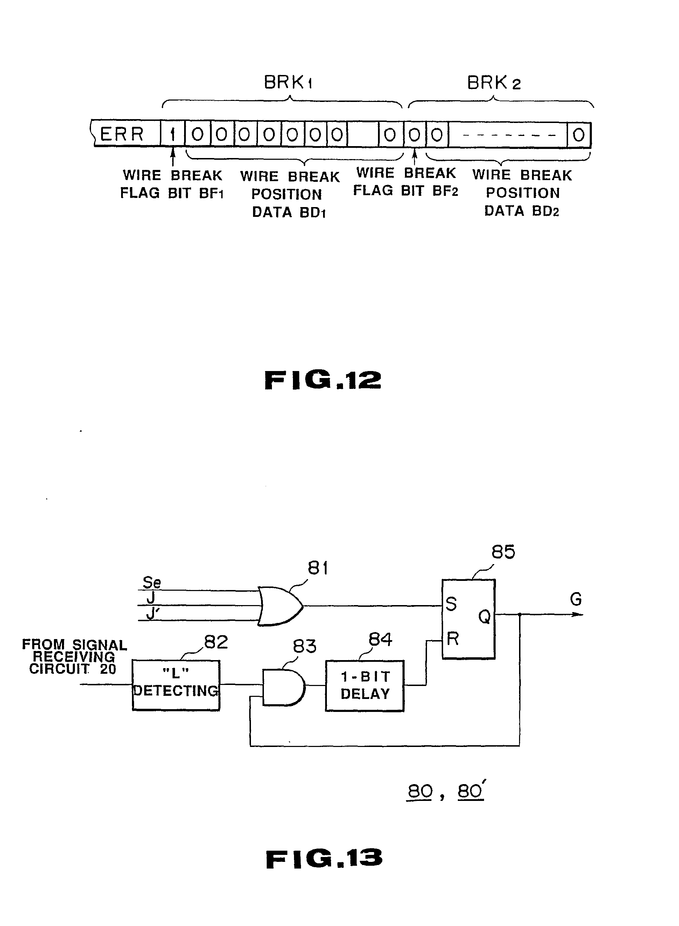

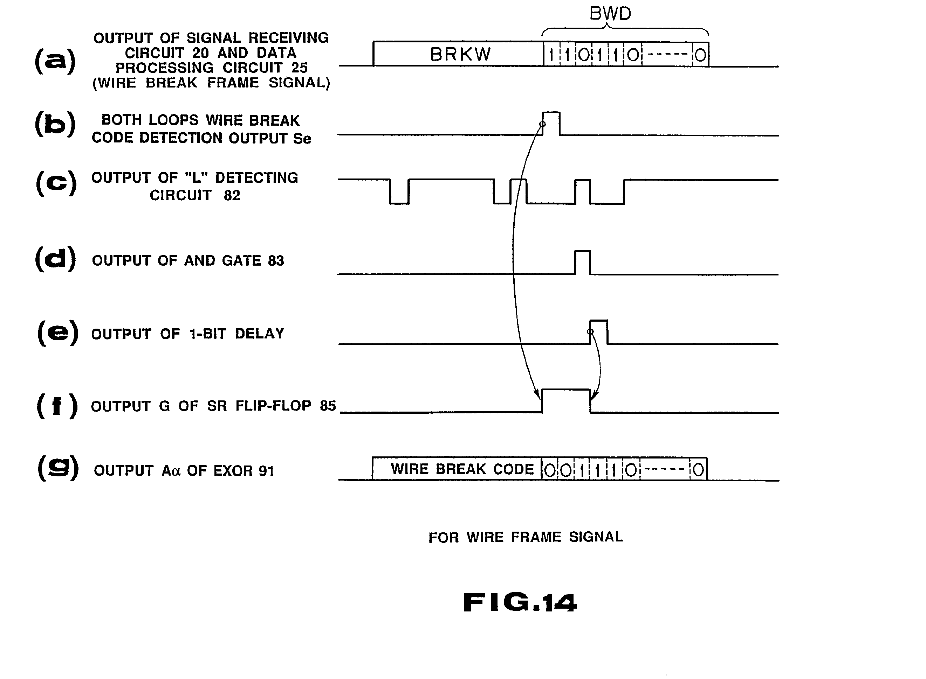

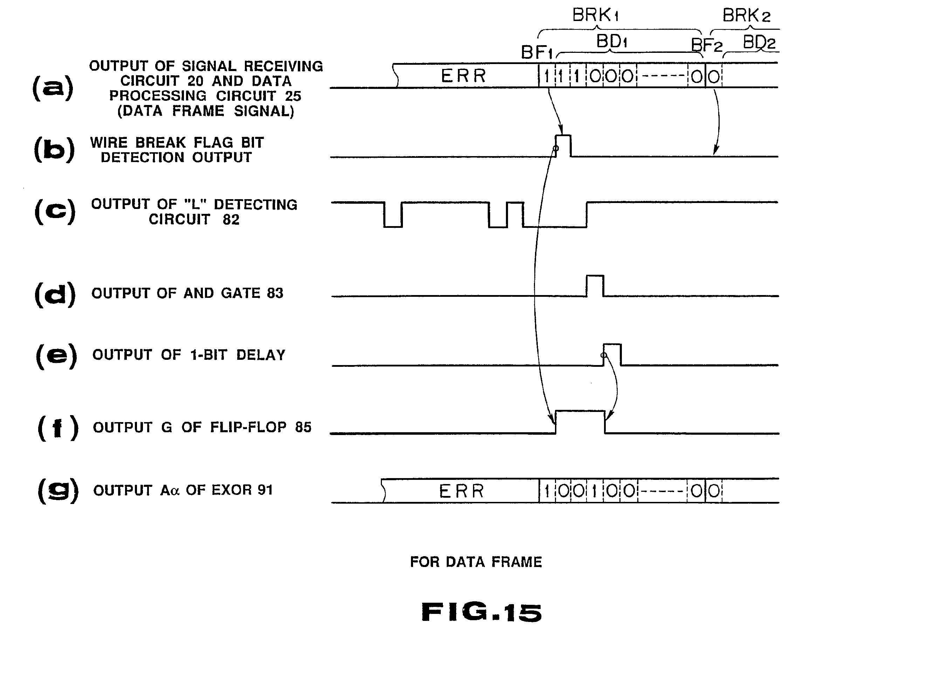

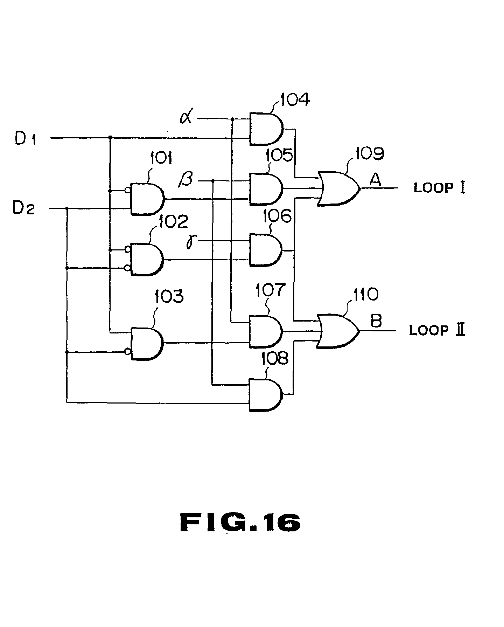

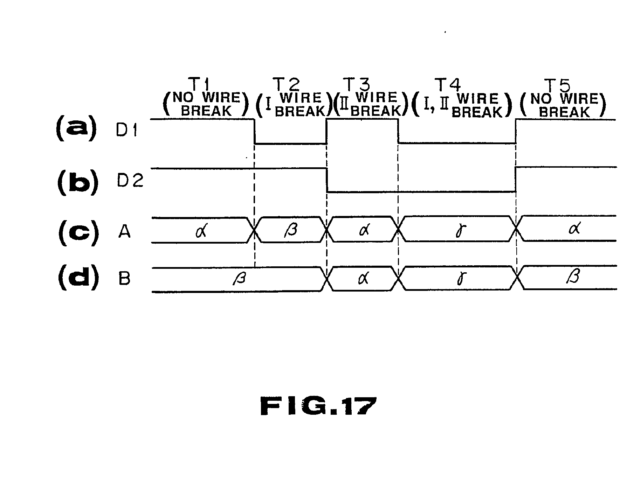

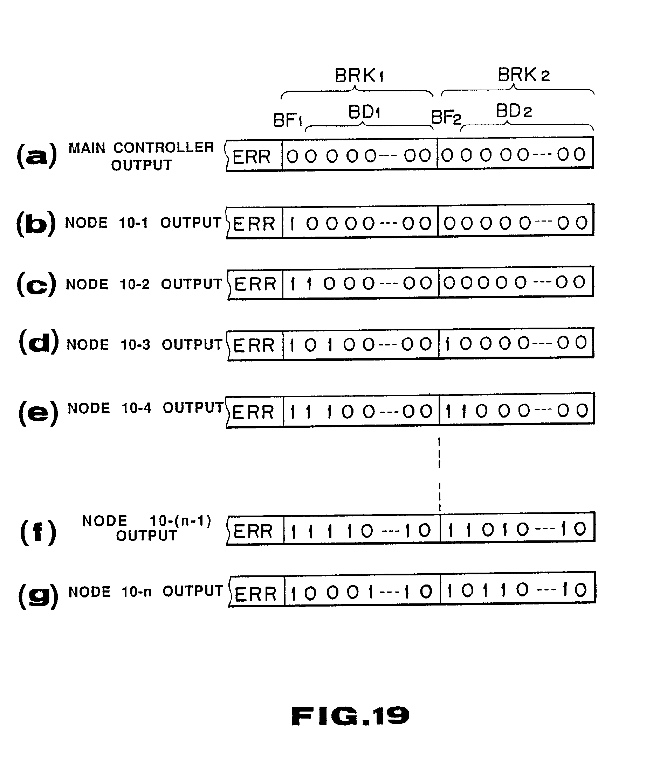

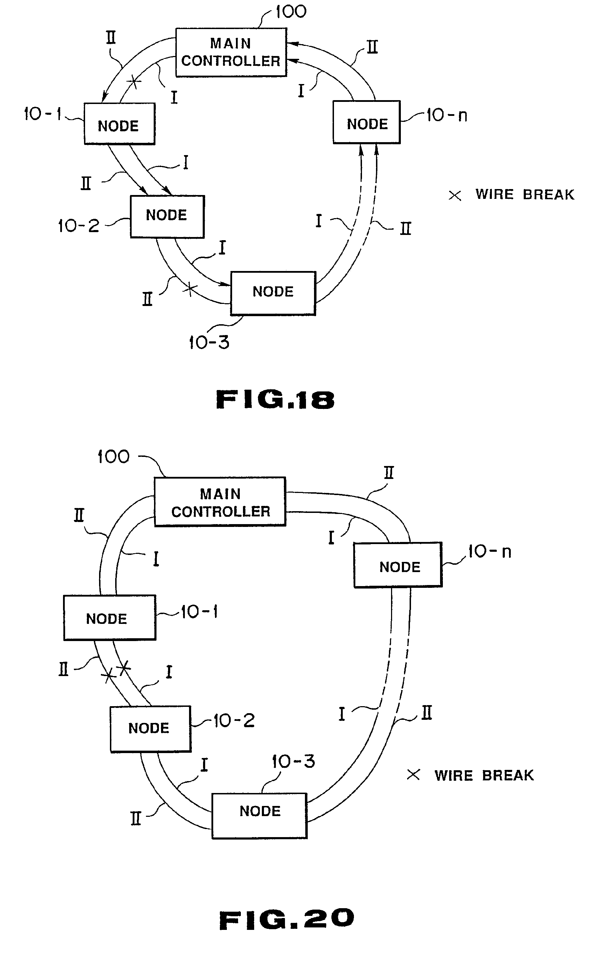

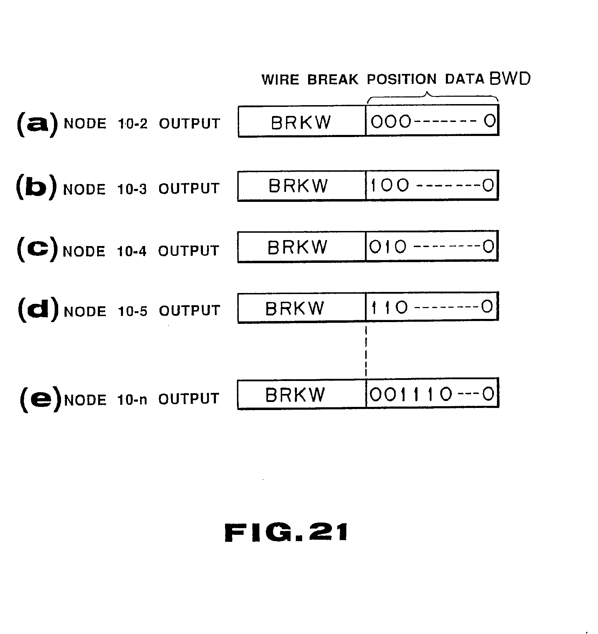

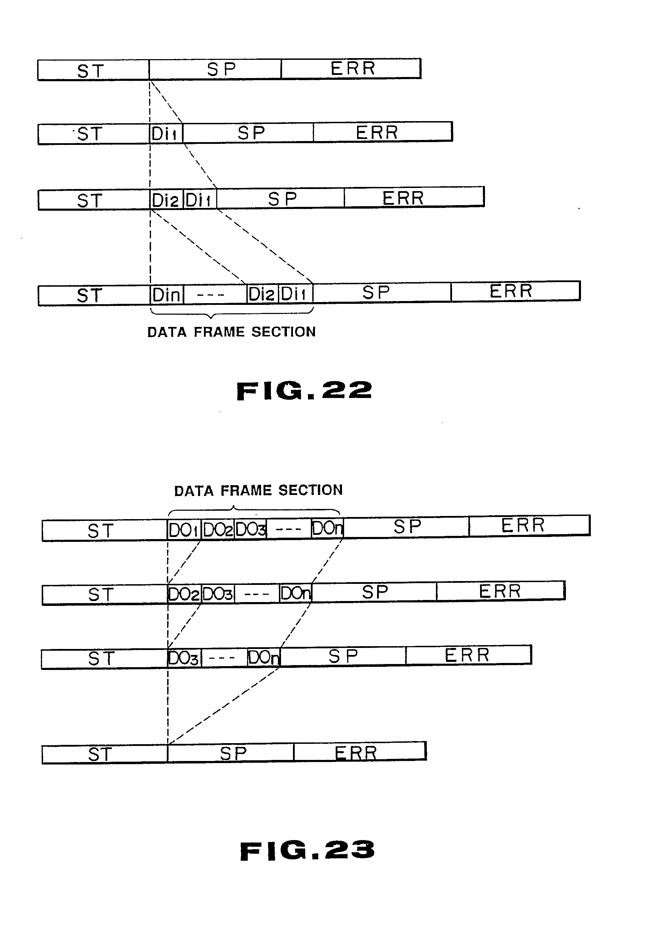

FIG. 1 is a block diagram showing the entire arrangement of one example of a series control system according to the invention. FIG. 2 is a block diagram showing one example of the arrangement of each node in the series control system shown in FIG. 1. FIG. 3 is a diagram showing one example of the format of a data frame signal in the invention. FIGS. 4 and 5 are diagrams for a description of the addition and removal of data in each node. FIG. 6 is a diagram for a description of the period of transmission of a frame signal. FIG. 7 is a logic circuit diagram showing one example of the internal arrangement of an output switching circuit and a switch in each node. FIG. 8 is a time chart for a description of the switching of loops I and II in each node. FIG. 9 is a block diagram showing one example of the internal arrangement of each block. FIG. 10 is a diagram showing one example of the format of the frame signal. FIG. 11 is also a diagram showing one example of the format of a wire break frame signal. FIG. 12 is a diagram showing a wire break code part in a data frame signal in detail. FIG. 13 is a block diagram showing the internal arrangement of a +1 operation auxiliary circuit in the node. FIG. 14 is a time chart for a description of the addition of a wire break position data of the wire break frame signal. FIG. 15 is a time chart for a description of the addition of a wire break position data of the data frame signal. FIG. 16 is a logical circuit diagram showing the internal arrangement of a switching circuit in each node. FIG. 17 is a time chart for a description of the switching of the loops I and II. FIG. 18 is a diagram showing one example of the breaking wire in the system. FIG. 19 is a diagram showing part of data frame signals outputted by the nodes when the breaking of wire occurs as shown in FIG. 18. FIG. 20 is a diagram showing another example of the breaking of wire in the system. FIG. 21 is a diagram showing wire break frame signals provided by the nodes when the breaking wire occurs as shown in FIG. 20. FIGS. 22 through 25 are diagrams showing other examples of the format of the frame signal employed in the invention. FIG. 26 is a diagram for a description of difficulties accompanying the prior art.

BEST MODE FOR CARRYING OUT THE INVENTION

This invention will be described with reference to its preferred embodiments shown in the accompanying drawings.

FIG. 1 shows a first example of a series control system according to the invention, which is applied to the collective control system of a press for instance. In this case, a main controller 100 is provided in the controller section of the press, sensor groups 1-1 through 1-n correspond to sensors for detecting various parts of the press, and actuator groups 2-1 through 2-n correspond to actuators for driving these parts of the press. The sensor group 1-1 and the actuator group 2-1 are connected to a node 10-1, the sensor group 1-2 and the actuator group 2-2 are connected to a node 10-2, the sensor group 1-3 and the actuator group 2-3 are connected to a node 10-3,..... and similarly the sensor group 1-n and the actuator group 2-n are connected to a node 10-n. The nodes 10-1 through 10-n and the main controller 100 are series-connected through loops I and II. The order of priority is established for these loops I and II, the first priority and the second priority as described later.

In the circuitry thus arranged, the main controller 100 collects the detection signals of the sensor groups 1-1 through

9

1-n connected respectively to the nodes 10-1 through 10-n, and applies drive data successively to the actuator groups 2-1 through 2-n connected respectively to the nodes 10-1 through 10-n.

FIG. 2 shows one example of the internal arrangement of the nodes 10-1 through 10-n shown in FIG. 1, especially the arrangement for loop selection and data reception of each node.

In this system a signal is employed whose frame arrangement is as shown in FIG. 3. That is, a start code ST is positioned at top, and is followed by a data train length data DL indicating data train length L (the number of bits of $Di_n$ to $DO_1$), input data $Di_n$, $Di_{n-1}$...... (data from the sensor groups), and output data ..... $DO_2$, $DO_3$ (data to the actuator groups). Input data is always inserted immediately after the data train length data DL, and output data are obtained from the last part of the data frame. In this case, a data length variable system is employed in which no empty data bits are provided. Therefore, immediately after the signal is outputted by the main controller 100, no input data $Di_n$, $Di_{n-1}$,.... are not included, and when the signal is inputted through the nodes 10-1 through 10-n to the main controller 100, no output data $DO_2$ and $DO_3$ are provided. The data frame is followed by a stop code SP and an error code ERR indicating various errors. The error code ERR can be used to indicate various errors. For instance, it is used to indicate when the data train length indicated by the data train length data DL is not coincided with the actual data train length detected.

10

FIGS. 4 and 5 show the transmission and reception of data which are carried out by the nodes 10-1 through 10-n in the case where the signal as described above is employed.

FIG. 4 shows a frame signal concerning a node which has one actuator 2. In the node 10, the last one bit is extracted from the frame signal inputted thereto, and the one bit data is added to the actuator 2. The node 10 converts the data train length data DL into one DL which corresponds to the data train length (four in this case) of the remaining data, and outputs the resultant frame signal.

FIG. 5 shows the inputting and outputting of a frame signal concerning a node 10 which has one sensor 1. In the node 10, the detection signal ("1" in this case) of the sensor 1 is added to the top of the data frame part of a frame signal inputted. Furthermore, the node 10 converts the data train length data DL into a data train length data which corresponds to the data train length increased by the insertion of the sensor's detection signal mentioned above, and outputs the resultant frame signal.

Now, the circuitry shown in FIG. 2 will be described. The arrangement of each of the nodes 10-1 through 10-n is as shown in FIG. 2.

In the system, the data transmission between the nodes 10 is carried out with CMI (Coded Mark Inversion) codes. This is to minimize the errors in transmission which may be caused by noises etc. during transmission, and to allow the nodes to reproduce (extract) clock signals.

In FIG. 2, the two loops I and II are connected to the nodes 10 as was described before. Therefore, each node employs a dual

11

arrangement in correspondence to the two loops I and II. That is, in FIG. 2, signal receiving circuits 20 and 20 are equal in arrangement and in function to each other, data processing circuits 25 and 25' are equal in arrangement and in function to each other, signal transmitting circuits 30 and 30' are equal in arrangement and in function, and similarly wire break (disconnection) detecting circuits 35 and 35', a frame dropout detecting circuits 40 and 40', and output data memories 45 and 45' are equal in arrangement and in function to each other, respectively.

The signal receiving circuits 20 and 20' receive a frame signal from the preceding and following nodes, and demodulates the received signal (that is, a signal which has been modulated by the CMI code) into a NRZ (Non Return Zero) code corresponding to ordinary "1" and "0". Furthermore, each of the signal receiving circuits 20 and 20' utilizes the CMI code modulated input signal to reproduce a clock signal which is used in this node.

The detection signal of the sensor group 1 connected to the node 10 and the outputs of the signal receiving circuits 20 are applied to the data processing circuits 25 and 25'. The data processing circuits 25 and 25' each perform the following operations: detection of the start code ST of a frame signal received from the preceding node, detection of the stop code SP, detection of the error code ERR, reading of the data train length data DL, counting of the actual data train length, comparison of the actual data train length thus counted with the data train length data DL, extraction of data which is to be added to the actuator group 2 (cf. FIG. 4), insertion of the detection signal of the

12

sensor group 1 to the data train (cf. FIG. 5), and addition of the error code ERR. The data processing circuits 25 and 25' apply the data extracted from the data trains to the output data memories 45 and 45', and inserts the detection signal of the sensor group 1 to the data trains, and apply the resultant frame signals to the signal transmitting circuits 30 and 30', respectively.

The signal transmitting circuits 30 and 30' perform modulation operations to convert the received signals into CMI codes, and apply the resultant signals through the loops I and II to the following node.

The output data memories 45 and 45' temporarily store the drive data for the actuator group 2 which are applied thereto by the data processing circuits 25 and 25', and supply the drive data to a switch SW1 with suitable timing.

The switch SW1 operates according to the output Sa of an output switching circuit and the outputs $D_1$ and $D_2$ of the wire break detecting circuits 35 and 35' to switch the outputs of the output data memory 45 connected to the loop I and of the output data memory 45' connected to the loop II. Now, arrangement concerning the operation of the switch SW1 will be described.

The main controller 100 shown in FIG. 1 operates to transmit the frame signal as shown in FIG. 3 with a predetermined period T as indicated in FIG. 6. In the wire break detecting circuits 35 and 35' of each node 10, when the frame signal is not applied to the node for longer than n periods nT (n $\geq$, for instance n = 2), it is determined that the breaking of wire has occurred. That is, the wire break detecting circuits 35 and 35' monitor the

13

outputs of the signal receiving circuits 20 and 20', respectively. When a frame dropout lasts longer than n times the period T of transmission of the frame signal, it is detected as the occurrence of disconnection, as a result of which the detecting circuits 35 and 35' apply detection signals $D_1$ and $D_2$ to the switch SW1.

The frame dropout detecting circuits 40 and 40' also monitor the outputs of the signal receiving circuits 20 and 20', respectively, and apply detection signals S1 and S2 to the output switching circuit 50 when a frame dropout lasts even for one period T.

More specifically, the wire break detecting circuits 35 and 35' and the frame dropout detecting circuits 40 and 40' are of timer arrangement. The period nT is set in the wire break detecting circuits 35 and 35' by timer means, and the period T is set in the frame dropout detecting circuits 40 and 40' by timer means. Each of those detecting circuits outputs a detection signal when for instance the start code ST of the frame signal is not detected for the period thus set.

The output switching circuit 50 utilizes the outputs S1 and S2 of the frame dropout detecting circuits 40 and 40' to form a switching signal Sa for operating the switch SW1. One example of the arrangement of the output switching circuit 50 is as shown in FIG. 7.

The output switching circuit 50 comprises five gate circuits 51 through 55 and a D-type flip-flop circuit 56. The outputs S1 and S2 of the frame dropout detecting circuits 40 and 40' are

14

applied to the gate circuits 51 and 52. The outputs S1 and S2 of the frame dropout detecting circuits 40 and 40' are normally at "H" level, and they are set to "L" level when a frame drop is detected. That is, the levels of the outputs S1 and S2 are changed at the fall of the clock signal CK applied to the D-type flip-flop circuit 56. The D-type flip-flop circuit 56 fetches the D input at the rise of the clock signal CK.

FIG. 7 shows the circuit of the switch SW1. The switch SW1 is made up of five gate circuits 61 through 65. The gate circuits 61 through 63 operates to select the data x from the loop I or the data y from the loop II according to the output Sa of the output switching circuit 50, and the output Z of the gate circuit 63 is applied to the AND gate 65. The outputs $D_1$ and $D_2$ of the wire break detecting circuits 35 and 35' are normally at "H" level, and are set to "L" level upon detection of the breaking of wire. Those outputs are applied to the gate circuit 64, the output of which is supplied to the AND gate circuit 65.

Accordingly, the output of the gate circuit 64 is set to "L" level when both the wire break detecting circuits detect the breaking of wires; that is, when both the outputs S1 and S2 are at "L" level. In this case, the output E of the AND gate 65 is set to "L" level irrespective of the output Z of the OR gate 63, thus inhibiting the fetching of output data for the actuator group 2. However, in other cases, the output of the gate 64 is raised to "H" level, and the AND gate 65 provides the output Z of the OR gate 63 at the output terminal E as it is.

One example of the operation of the output switching circuit 50 will be described with reference to FIG. 8.

15

When a frame dropout occurs as shown in the part (a) of FIG. 8, the outputs S1 and S2 of the frame dropout detecting circuits 40 and 40' are as shown in the parts (b) and (c) of FIG. 8, respectively. The variation of the output Sa of the flip-flop circuit 56 (the part (e) of FIG. 8) and that of the output Z of the OR gate 63 (the part (f) of FIG. 8) with respect to the variations of the two output signals S1 and S2 will be described in a time series mode, in the order of T1 through T11. The part (d) of FIG. 8 shows the clock signal CK.

(T1)

During this period, no frame dropout occurs in the loops I and II, and the output Sa of the flip-flop circuit 56 is at "L" level. As a result, the data x on the side of the loop I is provided as the output Z of the OR gate 63. In this case, the gates 61 through 63 are so designed that the data x is selected when the signal Sa is at "L", and the data y is selected when the signal Sa is at "H". The gates 53 through 55 are so logically designed that, when the output signals S1 and S2 are both at "H" level; i.e., no frame dropout occurs, the output Sa of the flip-flop circuit 56 provided with the preceding clock signal is maintained as it is. Therefore, if the output Sa is at "H" level with the preceding clock signal, the "H" level output Sa is maintained as it is; and if the output Sa is at "L" level with the preceding clock signal, the "L" level output Sa is maintained as it is. Thus, in the case of FIG. 8, the output Sa of the flip-flop circuit provided before the period T1 is at "L" level.

(T2)

16

A frame dropout occurs with the loop I. The output S1 of the frame dropout detecting circuit is set to "L" level, and therefore the output Sa of the flip-flop circuit 56 is raised to "H" at the rise of the clock signal C2. As a result, the data y is selected as the output Z of the OR gate, and the loop I is switched over to the loop II.

(T3)

The frame dropout of the loop I is eliminated, and a frame dropout occurs with the loop II. The signal S1 is raised to "H" level, while the signal S2 is set to "L". As a result, the output Sa of the flip-flop circuit 56 is set to "L" level at the rise of the clock signal C3. As a result, the data x is selected as the output Z of the OR gate 63, and the loop II is switched over to the loop I.

(T4)

The frame dropout of the loop II is eliminated, and a frame dropout occurs with the loop I. The signal S1 is set to "L" level, while the signal S2 is raised to "H" level. As a result, the output Sa of the flip-flop circuit 56 is raised to "H" level at the rise of the clock signal C4, whereby the data y is selected as the output Z of the OR gate 63, and the loop I is switched over to the loop II.

(T5)

The frame dropout of the loop I is not eliminated, and a frame dropout occurs with the loop II; that is, both of the loops and II suffer from frame dropout. Both of the signals S1 and S2 are set to "L" level. In the case where both of the signals S1 and S2 are at "L" level, similarly as in the case where both of

17

the signals S1 and S2 are at "H" level, the output Sa provided with the preceding clock signal is maintained as it is. Therefore, the signal Sa is maintained at "H" level, and the data of the loop II is selected. This is based on the logical concept that as the loop with which a frame dropout has occurred with the preceding clock signal is more positively broken than the loop with which a frame dropout occurs newly, the loop which suffers from frame dropout later is selected.

(T6)

The frame dropout of the loop II only is eliminated. The signal S1 is raised to "H" level, and the output Sa of the flip-flop circuit 56 is still maintained at "H" level, as a result of which the data y of the loop II is selected as it is.

(T7)

The frame dropout of the loop I is also eliminated. Both of the loops I and II are normal. Therefore, the signal S1 is raised to "H" level; however, the output Sa of the flip-flop circuit 56 is maintained at "H" level, as a result of which the data y of the loop II is selected.

(T8)

A frame dropout occurs with the loop II. The signal S2 is set to "L" level, and therefore the output Sa of the flip-flop circuit 56 is set to "L" level at the rise of the clock signal C8. As a result, the data x is selected as the output of the OR gate 63, and the loop II is switched over to the loop I.

(T9)

The frame dropout of the loop II is not eliminated, and a

18

frame dropout occurs with the loop I; that is, both the loops I and II suffer from frame dropout. The signals S1 and S2 are both set to "L". When both of the signals S1 and S2 are at "L" level, as was described before the output Sa provided with the preceding clock signal is maintained as it is; that is, in this case the signal Sa is maintained at "L" level. The data of the loop I is selected as it is.

(T10)

The frame dropout of the loop II is eliminated. The signal S2 is raised to "H" level. As a result, the output Sa of the flip-flop circuit 56 is raised to "H" at the rise of the clock signal C10, the data y is selected as the output of the OR gate 63, and the loop I is switched over to the loop II.

(T11)

The frame dropout of the loop II is eliminated, too, both of the loops I and II are normal, and the signal S1 is also raised to "H" level. However, the output Sa of the flip-flop circuit 56 is still maintained at "H" level, and the loop II is selected as it is.

As is apparent from the above-described logical switching technique, no order of priority is provided for the loops I and II. That is, when a frame dropout occurs with one of the loops even once, it is determined that the loop has been broken with high probability, and the loop is switched over to the other loop. Therefore, even if the breaking of wire is detected later, the loop has been switched over to the normal loop. This switching operation will prevent serious failures such as destruction of the machine itself, and can improve the reliability of the

19

system. In the case when both of the loops suffer from a frame dropout, it is determined that the loop with which the frame dropout occurred latter is lower in the probability of the breaking of wire than the other, and the loop with which the frame dropout occurred later is selected. Thus, the reliability of the system is further improved.

With the dual loop as described above, the following additional effects are obtained: In each of the nodes, the pair of arrangements are completely equal to each other. And no order of priority is established for the loops I and II. Therefore, in connecting the output terminals of the nodes, it is unnecessary to discriminate the loops to which the input and output terminals belong; that is, the input and output terminals can be connected irrespective of the loops. This will simplify the wiring greatly. This effect is obtained in the case, too, where a single loop is employed. It is unnecessary to provide special means to discriminate the loops, and the input terminals and the output terminals can be readily connected to one another.

FIG. 9 shows another example of the internal arrangement of each of the nodes 10-1 through 10-n. More specifically, FIG. 9 shows an internal arrangement which is provided for a processing operation carried out after detection of the breaking of wire. In FIG. 9, circuit elements corresponding functionally to those which have been described with reference to FIG. 2 are therefore designated by the same reference numerals or characters.

In this case, a data frame signal is as shown in FIG. 10. That is, a loop I wire break code BRK1 and a loop II wire break code BRK2 are added to the data frame signal shown in FIG. 3. In
this signal too, a start code ST is placed at top, and followed
by a data train length data DL indicating the length L (the
number of bits) of a data train, input data (from the sensor
groups), and output data (to the actuator groups) in the stated
order. In this case also, the input data are inserted immediately after the data train length data DL, and the output data are
obtained from the last of the data frame part DATA.

The data frame DATA is followed by a stop code ST and a CRC
code in the stated order. The CRC code is to perform a CRC check
to detect data errors. The CRC code is followed by an error code
ERR indicating various errors. The error code ERR does not
include a wire break error.

The loop I wire break code BRK1 is to indicate the wire
break of the loop I and the position of the wire break. Similarly, the loop II wire break code BRK2 is to indicate the wire
break of the loop II and the position of the wire break. When
the loops are free from the breaking of wire, the codes BRK1 and
BRK2 are both at "O". When a wire break occurs, data indicating
the occurrence of the wire break and the position of the wire
break are written in the code region corresponding to the loop
with which the wire break has occurred. With respect to the wire
break codes BRK1 and BRK2, it should be noted that, only when one
of the two loops between a node and its preceding node is broken,
the data indicating the occurrence of the wire break and the
position of the wire break are written. When the loops I and II
are broken between the same nodes, a wire break frame signal Γ
different in format from the data frame signal shown in FIG. 10

21

is outputted. The wire break frame signal, as shown in FIG. 11, consists of a predetermined code BRKW indicating the wire break of the two codes, and a wire break position data part BWD indicating the position of the wire break.

In FIG. 9, the two loops I and II are connected to each node 10 as was described above. Each node has a dual arrangement in correspondence to the two loops I and II. That is, signal receiving circuits 20 and 20', data processing circuits 25 and 25', signal transmitting circuits 30 and 30', wire break detecting circuits 35 and 35', signal input detecting circuits 70 and 70', wire break frame signal detecting circuits 75 and 75', +1 operation auxiliary circuits 80 and 80', and EXCLUSIVE OR gates 91 and 92 are equal in arrangement and in function to each other, respectively. In FIG. 9, means for receiving data from the actuator groups 2 and for transmitting data to the sensor groups 1 shown in FIG. 1 are not indicated.

The signal receiving circuits 20 and 20', similarly as those in FIG. 1, receive a frame signal from the preceding node, and demodulates the received signal (that is, a signal which has been modulated by the CMI code) into a NRZ (Non Return Zero) code corresponding to ordinary "1" and "0". Furthermore, each of the signal receiving circuits 20 and 20' utilizes the CMI code modulated input signal to reproduce a clock signal which is used in the present node.

The detection signal of the sensor group 1 (not shown) connected to the node 10 and the outputs of the signal receiving circuits 20 are applied to the data processing circuits 25 and

22

25'. The data processing circuits 25 and 25', similarly as those in FIG. 2, each perform the following operations: detection of the start code ST of a frame signal received from the preceding node, detection of the stop code SP, detection of the error code ERR, reading of the data train length data DL, counting of the actual data train length, comparison of the actual data train length thus counted with the data train length data DL, extraction of data which is to be added to the actuator group 2 (not shown) (cf. FIG. 4), insertion of the detection signal of the sensor group 1 (not shown) to the data train (cf. FIG. 5), and addition of the error code ERR. Further description of those processing operations will not be made because they are not directly related to the present invention.

When the breaking of wire occurs, the data processing circuits 25 and 25' operate as follows: In the data frame signal shown in FIG. 10, the loop I wire break code BRK1 and the loop II wire break code BRK2, as shown in FIG. 12, consist of wire break flag bits BF1 and BF2 indicating whether or not the breaking of wire occurs, and wire break position data parts BD1 and BD2, respectively. Immediately after the data frame signal is outputted by the main controller 100, or when the loops are free from the breaking of wire, all the bits of the codes BRK1 and BRK2 are "0" as was described above. Upon occurrence of the breaking of wire, the data processing circuits 25 and 25' change the wire break flag bits BF1 and BF2 of the codes BRK1 and BRK2 into "1" in response to the wire break detection outputs D1 and D2. This flag processing is carried out by the data processing circuits 25 and 25' in the node which is located immediately after the loop

23

position where the breaking of wire has occurred. In the following node, the data processing circuits 25 and 25' detect the "1" of the wire break flat bits BF1 and BF2 of the codes BRK1 and BRK2, to output a detection signals J and J', each of which is applied to both of the +1 operation auxiliary circuits 50 and 50'.

That is, in each node, the data processing circuits 25 and 25' have the following functions to deal with the breaking of wire:

(1) Raising the wire break flag bits BF1 and BF2 to "1" in response to the wire break detection signals D1 and D2, and

(2) Outputting the detection signals J and J' according to the results of decision of the flag bits, "1" and "0".

In FIG. 9, a switching circuit SW2 operates according to the outputs D1 and D2 of the wire break detecting circuits 35 and 35', to selectively provide, as two output A and B, the output $\alpha$ of the data processing circuit 25 connected to the loop I, the output $\beta$ of the data processing circuit 25' connected to the loop II, and the output $\Gamma$ of a wire break frame signal generator 90. The two outputs A and B are applied through the EXCLUSIVE OR gates 91 and 92 to the signal transmitting circuits 30 and 30', respectively.

The signal transmitting circuits 30 and 30' carry out a modulation to convert a received signal into a CMI signal. The CMI signals are applied through the loops I and II to the following node.

Now, the arrangements of the signal input detecting circuits

24

70 and 70', the wire break detecting circuits 35 and 35', the wire break frame signal detecting circuits 75 and 75' and the +1 operation auxiliary circuits 80 and 80', and the switching operation of the switching circuit SW2 will be described.

The main controller 100 as shown in FIG. 1 operates to output the data frame signal as shown in FIG. 10 with the predetermined period T as indicated in FIG. 6. When the frame signal is not applied to the corresponding node for n periods nT (where $n \geq$, for instance n = 2) the wire break detecting circuits 35 and 35' determines that the breaking of wire has occurred. The signal input detecting circuits 70 and 70' monitor the outputs of the signal receiving circuits 20 and 20, to detect the start code ST of the data frame signal shown in FIG. 10 or the two-loop wire break code BRKW of the wire break frame signal. Upon detection of these codes ST and BRKW, the signal input detecting circuits 70 and 70' output reset signals RT and RT', respectively.

The wire break detecting circuits 35 and 35' are of timer arrangement. More specifically, the above-described period nT have been set in the wire break detecting circuits 35 and 35' by timer means. The time count values of the circuits 35 and 35' are reset whenever the reset signals RT and RT' are applied thereto. Therefore, the wire break detecting circuits 35 and 35' are reset whenever a data frame signal is applied thereto; however, when a frame drop lasts for more than the timer set time nT, the reset signals RT and RT' of the signal input detecting circuits 70 and 70' are not applied to the wire break detecting circuits 35 and 35' during that period. As a result, an overflow occurs with the time, and the wire break detecting circuits 35

25

and 35' output the wire break detection signals D1 and D2. That is, when a frame dropout last for more than n times the data frame signal transmitting period T, the wire break detecting circuits 35 and 35' determine that the breaking of wire has occurred, and apply detection signals S1 and S2 to the switching circuit SW2 and the wire break frame signal generator 90.

The outputs D1 and D2 of the wire break detecting circuits 35 and 35' are applied to the data processing circuits 25' and 25, respectively (D1 to 25', and D2 to 25). The data processing circuit 25 receiving the output signal D2 raises to "1" the wire break flag bit BF2 of the loop II wire break code BRK2 in the data frame signal shown in FIG. 10; whereas the data processing circuit 25' receiving the output signal D1 raises to "1" the wire break flag bit BF2 of the loop I wire break code BRK21 in the data frame signal.

Upon reception of the wire break detection signals D1 and D2 from both of the wire break detecting circuits 35 and 35', the wire break frame signal generator 90 outputs the wire break frame signal Γ consisting of the wire brake code BRKW and the wire break position data part BWD as shown in FIG. 11. The output of the circuit 90 is applied to the switching circuit SW2. The wire break position data part BWD is all "0" when outputted by the wire break frame signal generator 90.

The wire break frame signal detecting circuits 75 and 75' utilize the outputs of the signal receiving circuits 20 and 20' to determine with respect to the loops I and II whether or not the wire brake frame signal Γ has been supplied from the preceding node. Upon detection of the wire break code BRKW of the wire brake frame signal Γ, the wire break frame signal detecting circuits 75 and 75' apply detection signals Se and Se' to the wire break detecting circuits 35 and 35', respectively, as a result of which the signals D1 and D2 are forcibly raised to "H" level.

The detection signals Se and Se' of the wire break frame signal detecting circuits 75 and 75' are further applied to the +1 operation auxiliary circuits 80 and 80', respectively.

FIG. 13 shows the arrangement of the +1 operation auxiliary circuits 80. The circuit 80 comprises: an OR gate 81; an "L" detecting circuit 82; an AND gage 83; a 1-bit delay circuit 84; and an S-R flip-flop circuit 87. The circuit 80 thus designed and the EXCLUSIVE OR circuit 91 form a +1 addition circuit. The arrangement of the +1 operation auxiliary circuit 80' is the same as that of the +1 operation auxiliary circuit 80.

The OR gate 81 receives the detection signal Se of the wire break frame signal detecting circuit 75 and the detection signals J and J' of the data processing circuits 25 and 25'. The output of the OR gate 81 is applied to the set terminal S of the flip-flop circuit 85.

The output of the signal receiving circuit 20 is applied to the "L" detecting circuit 82. The circuit 82 is made up of an inverter for instance to subject an input signal to logical inversion thereby to detect "L" in the input signal. The output of the "L" detecting circuit 82 is applied to one input terminal of the AND gate 83, to the other input terminal of which the Q output G of the flip-flop circuit 85 is fed back.

27

The 1-bit delay circuit 84 delays the output of the AND gate 83 by one bit, and applies the output thus delayed to the reset terminal R of the S-R flip-flop circuit 85. The S-R flip-flop circuit 85 is an ordinary set-reset type flip-flop circuit, its output G is applied to the EXCLUSIVE OR gate 91 in FIG. 9.

In the +1 operation auxiliary circuit 80, the output Se of the wire break frame signal detecting circuit 75 and the detection signals J and J' of the data processing circuits 25 and 25' are applied to the set terminal S of the S-R flip-flop circuit 85, to the reset terminal R of which the 1-bit delayed output of the "L" detecting circuit 82. Therefore, when the wire break frame signal Γ is applied to the node, the output G of the S-R flip-flop circuit 85 is raised to "H" level in synchronization with the detection of the two-loop wire break code BRKW as shown in the parts (a) through (g) of FIG. 14, and it is maintained at "H" level until the first "0" in the wire break position data part BWD is reached. When the data frame signal with the wire break flag bit BF1 or BF2 set to "1" is applied to the node, the output G of the S-R flip-flop circuit 85 is raised to "H" in synchronization with the "1" detection J or J' of the wire break flag bit (BF1 in this case) by the data processing circuit 25 as shown in the part (a) through (g) of FIG. 15, and the output G is maintained at "1" until the first "0" of the wire break position data part BD1 or BD2 is reached.

The switching circuit SW2, as shown in FIG. 16, comprises ten gates 101 through 110. The signals D1 and D2 provided by the wire break detecting circuits 35 and 35' are normally at "H" level, and they are set to "L" upon detection of the breaking of wire. That is, the switching circuit SW2 selects the three input signals α, β and Γ according to the two signals D1 and d2, to provide them as the outputs A and B.

In the EXCLUSIVE OR gates 91 and 92, the outputs A and b of the switching circuit SW2 and the outputs G and G' of the +1 operation auxiliary circuits 80 and 80' are EXCLUSIVE-ORed, whereby the wire break position data part BWD of the wire break frame signal applied thereto through the switching circuit SW2 is subjected to +1 addition as shown in the part (g) of FIG. 14, while the wire break position data BD1 and BD2 of the codes BRK1 and BRK2 of the data frame signal are subjected to +1 addition.

Prior to the whole operation, the switching operation of the switching circuit SW2 will be described with reference to various wire breaking cases as shown a time chart of FIG. 17.

(T1, T5)

During the period T1 or T5, no breaking of wire occurs between the present node and the preceding node. Both of the outputs D1 and D2 of the wire break detecting circuits 35 and 35' are at "H" level, and the loop I side output A of the switching circuit SW2 is the output α of the loop I side data processing circuit 25, while the loop II side output B of the switching circuit SW2 is the output β of the loop II side data processing circuit 25'.

That is, in each of the nodes 10-1, 10-2,....., when no breaking of wire occurs between the present node and the preceding node, the signal transmitting circuit 30 on the loop I side selects the signal provided through the signal receiving circuit 20 and the data processing circuit 25 on the loop I side, while the signal transmitting circuit 30' on the loop II side selects the signal provided through the signal receiving circuit 20 and the data processing circuit 25' on the loop II side.

(T2)

During the period, the breaking of wire occurs between the present node and the preceding node on the loop I side. The signal D1 is set to "L" level, and the signal D2 is maintained at "H". The outputs A and B of the OR gates 79 and 80 of the switching circuit SW2 are the output β of the data processing circuit 25' on the loop II side. That is, when only the loop I is broken between the present node and the preceding node, the signal on the normal loop II side is applied to the loops I and II between the present node and the following node. In this case, the wire break detection D1 at "L" level is applied to the data processing circuit 25' on the loop II side by the wire break detecting circuit 35 on the loop I side, and therefore, the data processing circuit 25' raises to "1" the wire break flat bit BF1 of the loop I wire break code BRK1 in the data frame signal. In this case, the wire break position data BD1 of the loop I wire break code BRK1 which are all "0" are outputted as they are.

(T3)

During this period, in contrast to the above-described period T2, the breaking of wire occurs with the loop II. The signal D2 is set to "L" level, while the signal D1 is raised to "H" level. The output α of the data processing circuit 25 on the loop I side is provided at the outputs A and B of the OR gates of the switching circuit SW2. That is, when, between the present node and the preceding node, the loop II is broken and the loop I is normal, the signal on the normal loop I side is applied to the loops I and II. In this case, the wire break detection D2 at "L" level is applied to the data processing circuit 25 on the loop I side by the wire break detecting circuit 35' on the loop II side, and therefore, the data processing circuit 25 raises to "1" the wire break flat bit BF2 of the loop II wire break code BRK2 in the data frame signal shown in FIGS. 10 and 12. In this case, the wire break position data BD2 of the loop II wire break code BRK2 which are all "0" are outputted as they are.

(T4)

During this period T4, the breaking of wire occurs with both of the loops I and II. The signals D1 and D2 are set to "L" level, and the wire break frame signal $\Gamma$ as shown in FIG. 11 is provided as the outputs A and B of the OR gates 79 and 80 of the switching circuit SW2. As a result, the signal transmitting circuits 30 and 30' apply the wire break frame signal $\Gamma'$ to the following node.

The operation of the system in the case where the loop I between the main controller 100 and the node 10-1, and the loop II between the nodes 10-2 and 10-3 are broken as shown in FIG. 8 will be described with reference to FIG. 19.

In this case, the state of the node 10-1 corresponds to that during the period T2 in FIG. 17. The data processing circuit 25' of the node 10-1 on the loop II side processes (insertion and removal of data) the frame signal (cf. the part (a) of FIG. 19) received through the normal loop II from the main controller 100,

31

and raises the loop I wire break flag bit BF1 of the data frame signal to "1" in response to the "L" input of the wire break detection signal D1 provided by the wire break detecting circuit 35. In this case, the output β of the data processing circuit 25' on the loop II side is selected as the outputs A and B of the switching circuit SW2, and therefore the data frame signal including two codes BRK1 and BRK2 as shown in the part (b) of FIG. 19 is supplied tot the following node 10-2 through the loops I and II.

The data processing circuits 25 and 25' of the node 10-2 process the data frame signal received through the loops I and II as required for the inputting and outputting of data, detect "1" of the wire break flag bit BF1 of the loop I wire break code BRK1, and apply the detection signals J and J' to the +1 operation auxiliary circuits 80 and 80', respectively. As a result, the +1 operation auxiliary circuits 80 and 80' operate as shown in the parts (a) through (f) of FIG. 15, so as to provide signals as the outputs G and G' for subjecting the wire break position data BD1 of the code BRK1 to +1 addition.

On the other hand, being free of the breaking of wire, the state of the node 10-2 corresponds to that during the period T1 or T5 shown in FIG. 17. Accordingly, the outputs α and β of the data processing circuits 25 and 25' are applied through the EXCLUSIVE OR gates 91 and 92 to the signal transmitting circuits 30 and 30', respectively, so that they are supplied to the loops I and II, respectively. Passing through the EXCLUSIVE OR gates 91 and 92, the wire break position data BD1 of the loop I wire break code BRK1 of the data frame signal in each loop is subjected to +1 addition as indicated in the part (c) of FIG. 19; that is, it is converted into "1 0 0 .... 0", which is applied to the following node 10-3.

As for the node 10-3, the breaking of wire has occurred with the loop II. Therefore, the state of the node 10-3 corresponds to that during the period T3 shown in FIG. 17. The data processing circuit 25, on the loop I side, of the node 10-3 processes the data frame signal received from the normal loop I as required for the inputting and outputting of data, detects "1" of the wire break flag bit BF1 of the loop I wire break code BRK1, and applies the detection signal J to the +1 operation auxiliary circuits 80 and 80'. As a result, similarly as in the above-described case, the +1 operation auxiliary circuits 80 and 80' output signals for subjecting the wire break position data BD1 to +1 addition. On the other hand, the wire break detecting circuit 35' detects the breaking of the loop II, and applies the detection signal D2 to the data processing circuit 25. In response to the detection signal D2, the data processing circuit 25 raises the loop II wire break flag bit BF2 of the data frame signal to "1" as shown in the part (d) of FIG. 19. In this case, the output a of the data processing circuit 25 on the loop I side is provided as the outputs A and B of the switching circuit SW2. Therefore, the data frame signal outputted by the data processing circuit 25 is applied through the EXCLUSIVE OR gates 91 and 92 with the wire break position data BD1 of the loop I wire break code BRK1, and through the signal transmitting circuits 30 and 30' to the loops I and II. That is, the node 10-3 applies the

33

data frame signal including the wire break codes as shown in the part (d) of FIG. 19 to the loops I and II.

In this case, the remaining nodes 10-4 through 10-n are free of the breaking of wire. Therefore, in each of those nodes 10-4 through 10-n, the data frame signal received through each of the loops I and II is processed as required for the inputting and outputting of data, and raises the wire break position data BD1 and BD2 of the loop I and II wire break codes BRK1 and BRK2 to "1" successively as shown in the parts (e) through (g) of FIG. 19. As a result, the node 10-n applies the data frame signal including the wire break code part as shown in the part (g) of FIG. 18 to the main controller 100.

The main controller 100 detects the wire break flag bits BF1 and BF2 of the wire break code part to detect the breaking of wire, and inversely operates the wire break position data BD1 and BD2 to detect the position of the breaking of wire.

Now, the operation of the system in the case where the loops I and II are broken between nodes (nodes 10-1 and 10-2 in this case) will be described.

Upon detection of the breaking of wire by the wire break detecting circuits 35 and 35 of the node 10-2, the detection signals D1 and D2 are set to "L". As a result, the wire break frame signal generator 90 produces the wire break frame signal $\Gamma$ shown in FIG. 11 with a period Ta shorter than the frame signal transmitting period T of the main controller 100 (Ta < T). Similarly as in the case of the period T3 shown in FIG. 17, the switching circuit SW2 is so operated as to select the output of

34

the wire break frame signal generator 90 as the outputs A and B. Therefore, the node 10-2 supplies a wire break frame signal as shown in the part (a) of FIG. 21 to the loops I and II.

In the nodes 10-3,.... following after the node 10-2, the wire break detecting circuits 35 and 35' detect the breaking of wire to tend to set the signals D1 and D2 to "L". However, substantially at the same time, the wire break frame signal detecting circuits 75 and 75 of the node 10-3 detect the wire break code BRKW of the wire break frame signal Γ received from the preceding node 10-2, to supply the detection signals Se and Se' to the wire break detecting circuits 35 and 35' and the +1 operation auxiliary circuits 80 and 80', respectively.

Accordingly, the outputs D1 and D2 of the wire break detecting circuits 35 and 35' are held at "H" level instead of "L" level. Hence, the contacts of the switching circuit SW2 are connected to the side of the data processing circuits 25 and 25' instead of the side of the wire break frame signal generator 90. On the other hand, in response to the detection signals Se and Se', the +1 operation auxiliary circuits 80 and 80' operate as shown in FIG. 14, to output signals for subjecting the wire break position data part BWD of the wire break frame signal to +1 addition. The signals thus outputted are applied to the EXCLUSIVE OR gates 91 and 92. The data processing circuits 25 and 25' are so designed as to transmit the wire break frame signal Γ as it is. Therefore, the wire break frame signal Γ transmitted from the node 10-2 through the loops I and II is applied through the switching circuit SW2 to the EXCLUSIVE OR gates 91 and 92, whereby the wire break position data part BWD is supplied through the

35

signal transmitting circuits 30 and 30' to the loops I and II after being subjected to +1 addition as shown in the part (b) of FIG. 21.

The nodes 10-4, 10-5,.... and 10-n operate in the same manner as the above-described node 10-3. As such, the wire break

frame signal $\Gamma$ produced by the node 10-2 is supplied to the main controller 100 with its wire break position data part BWD subjected to +1 addition successively by the nodes 10-3, 10-4 ...

as shown in the parts (c) through (e). In response to the wire

break frame signal $\Gamma$, the main controller 100 reversely operates the wire break position data BWD to detect the breaking of wire with the loops I and II immediately before the node 10-2.

As was described above, with the arrangement of FIG. 9, no order of priority is established for the loops I and II, and all the loops which are located between nodes and free of the breaking of wire are all utilized for transmission of signals. Therefore, the transmission of signals is carried out except when the loops I and II are broken between adjacent nodes. That is, with the system, a so-called "system down" will not be readily caused;

in other words, concerning the breaking of wire, the system is high in durability and in reliability.

When, in the case where the data frame signal as shown in FIG. 10 is employed, the breaking of wire occurs with one of the loops, the data indicating the breaking of wire and the position of the breaking of wire are written in the wire break code part BRK1 and BRK2. When the breaking of wire occurs with both of the loops, the wire break frame signal $\Gamma$ including the wire break

36

position data as shown in FIG. 11 is used. Therefore, the main controller 100 can positively detect the breaking of wire, so that the breaking of wire can be eliminated with ease. Furthermore, the wire break position data parts BD1 and BD2 of the wire break code parts BRK1 and BRK2 in the data frame signal, and the wire break position data BWD of the wire break frame signal Γ are subjected to +1 addition in each node, and the resultant data of addition is reversely operated by the main controller so as to locate the breaking of wire. Therefore, it is unnecessary to assign node numbers to the nodes for identification, and all the nodes may be equal in arrangement to one another. The system can be designed readily, and can be manufactured at low cost and with high efficiency.

The above-described embodiment can be changed or modified without departing from the invention. The format of the frame signal employed in the invention is not limited to those shown in FIGS. 3 and 10.

For instance in the case where only the sensor 1 is connected to each node, the following method may be employed: input data $Di_1$ through $Di_n$ from the sensors of the nodes are successively inserted in the data frame part between the start code ST and the stop code SP as shown in FIG. 22, and the frame signal thus formed is applied to the two loops I and II. The part (a) of FIG. 22 shows the frame signal which has just been outputted by the main controller 100. The input data $Di_1$ through $Di_n$ from the nodes are added successively to the frame signal thus outputted. Thus, finally a frame signal as shown in the part (d) of FIG. 22 is applied to the main controller 100. In FIG. 22, in the nodes,

37

the data inserting positions may be so arranged that the input data are arranged in the order of $Di_1$, $Di_2$,.... $Di_n$.

In the case where only the actuator 2 is connected to each node, the following method may be employed: As shown in FIG. 23, the region between the ST code and the SP code is used for the control data $DO_1$ through $DO_n$ for the actuators 2, and those control data are extracted successively at the nodes. The part (a) of FIG. 23 shows the signal which has just been outputted by the main controller 100, and the part (d) the signal which is received by the main controller 100. The order of the control data $DO_1$ through $DO_n$ may be reversed; that is, they may be arranged in the order of $DO_n$, $DO_{n-1}$,...... $DO_1$.

As shown in FIG. 24, a start code STI for the input data Di and a start code STO for the output data may be provided separately. In FIG. 24, reference character $Di_q$ designates input data inserted at the node; Di, the input data which have been inserted at the preceding nodes; $DO_q$, control data extracted at the node; and DO, control data which are extracted at the following nodes. The data $Di_q$ is inserted immediately after the start code STI, and the data $DO_q$ is extracted from immediately after the start code STI; however, the signal may be so designed that the data $Di_q$ is inserted after the data Di, and the data $DO_q$ is extracted from after the data DO.

The above-described frame arrangement is of a data length variable type in which a signal length is variable. However, a frame arrange of a data length fixed type as shown in FIG. 25 may be employed. In FIG. 25, data frames DF1 through DF5 are data

38

regions which are fixedly assigned to five nodes. The part (a) of FIG. 25 shows a frame signal which has just been outputted by the main controller 100; the parts (b) and (c) frame signals which are outputted by the nodes 10-1 and 10-2, respectively; and the part (d), a frame signal which is applied to the main controller 100 through the five nodes. As is apparent from FIG. 5, in each node the control data DO for the actuator of the node is extracted from the data region DF provided for the node, and the detection data Di of the sensor of the node is inserted in the data region DF, so that the signal length is maintained unchanged.

It goes without saying that the data frame signals different in format as shown in FIGS. 22 through 25 include the wire break codes BRK1 and BRK2 as shown in FIG. 10.

In the above-described embodiment, the wire break position data part is subjected to +1 addition in each node, whereby the provision of node identifying numbers is eliminated. However, the nodes may be so designed that different node identifying numbers are provided for different nodes.

The arrangement of detecting the breaking of wire by the signal input detecting circuit 70 and the wire break detecting circuit 35, and the arrangement of performing +1 addition by the+1 auxiliary circuit 80 and the EXCLUSIVE OR circuit 91 have been described by way of example; that is, they may be changed or modified freely so that they function in the same manner.

The formats of the wire break code parts BRK1 and BRK2 in the data frame signal, and of the wire break signal are not limited only to those which have been described.

39

In the above-described embodiment, the plurality of nodes 10-1 through 10-n are connected, in the form of a closed loop, to one another through the main controller 100. However, the technical concept of the invention can be equally applied to the case where the nodes 10-1 through 10-n are connected in the form of an open loop including the main controller 100.

INDUSTRIAL APPLICABILITY

The series control system according to the invention is effectively applicable to a collective control system for a press, machine tool, unmanned conveyor, or the like.

CLAIMS

1. A series control system in which a plurality of nodes each having at least a terminal and a main controller for controlling said plurality of nodes are connected in series to one another, and each node is so designed that, when said node receives from the preceding node a frame signal including output data for said terminals of said nodes which is outputted by said main controller with a predetermined period, said node extracts the output data from said frame signal which is provided for the terminal of said node, and applies said output data thus extracted to said terminal, and applies to the following node said frame signal from which said output data has been extracted, in which

said plurality of nodes and said main controller are series-connected with two signal lines, and

each node comprises:

first and second frame dropout detecting means which perform a detecting operation with respect to said two signal lines, respectively, in such a manner as to determine the occurrence of a frame dropout whenever said frame signal is not received through said signals lines for longer than said predetermined period; and

switching means for selecting one of said two signal lines according to outputs of said first and second frame dropout detecting means, and applying to said terminal thereof said output data included in said frame signal which is provided on said signal line thus selected.

2. A series control apparatus as claimed in claim 1, in which said first and second frame dropout detecting means operate

41

to detect whether or not said frame signal has been received for more than one period.

3. A series control apparatus as claimed in claim 1, in which, when a detection signal is inputted by one of said first and second frame dropout detecting means, the signal line to which said detection signal is not inputted is selected.

4. A series control apparatus as claimed in claim 1, in which, when a detection signal is inputted by both of said first and second frame dropout detecting means, said switching means selects the signal line with which a frame dropout has occurred later.

5. A series control system in which a plurality of nodes each having at least a terminal and a main controller for controlling said plurality of nodes are connected in series to one another, and each node is so designed that, when said node receives from the preceding node a frame signal including output data for said terminals of said nodes which is outputted by said main controller with a predetermined period, said node extracts the output data from said frame signal which is provided for the terminal of said node, and applies said output data thus extracted to said terminal, and applies to the following node said frame signal from which said output data has been extracted, in which

said plurality of nodes and said main controller are series-connected with two signal lines, and

each node comprises:

first and second frame dropout detecting means which perform a detecting operation with respect to said two signal lines, respectively, in such a manner as to determine the occurrence of a frame dropout whenever said frame signal is not received through said signals lines for longer than said predetermined period;

first and second wire break detecting means which perform a detecting operation with respect to said signal lines in such a manner as to determine the occurrence of the breaking of wire whenever said frame signal is not received through said signal line for a predetermined period of time longer than said predetermined period; and

switching means which,

when a detection signal is inputted by none of said first and second wire break detecting means, selects one of said two signal lines according to outputs of said first and second frame dropout detecting means, and applies to said terminal thereof said output data included in said frame signal provided on said signal line thus selected, and

when a detection signal is inputted by both of said first and second wire break detecting means, inhibits fetching of said output data.

6. A series control system as claimed in claim 5, in which when a detection signal is inputted by one of said first and second frame dropout detecting means, the signal line to which said detection signal is not inputted is selected.

7. A series control apparatus as claimed in claim 5, in which, when a detection signal is inputted by both of said first and second frame dropout detecting means, said switching means selects said signal line with which a frame dropout has occurred

43

later.

8. A series control system in which a plurality of nodes each having at least a terminal and a main controller for controlling said plurality of nodes are connected in series to one another, and each node is so designed that, when said node receives from the preceding node a frame signal including output data for said terminals of said nodes which is outputted by said main controller with a predetermined period, said node extracts the output data from said frame signal which is provided for the terminal of said node, and applies said output data thus extracted to said terminal, and applies to the following node said frame signal from which said output data has been extracted, in which

said plurality of nodes and said main controller are series-connected with two signal lines, and

each node comprises:

first and second wire break detecting means for detecting whether or not said two signal lines between said node and the preceding node are broken;

wire break frame signal generating means for producing a predetermined wire break frame signal indicating the breaking of wire of said signal lines; and

signal switching means which, according to detection outputs of said first and second wire break detecting means,

when none of said two signal wires are broken, transmits data frame signals received from said two signal lines to the corresponding two signal lines between said node and the following node,

44

when one of said two signal wires is broken, transmits said data frame signal provided by said signal wire which is not broken to said two signal wires between said node and the following node, and

when both of said two signal wires are broken, transmits said wire break frame signal thus formed to said two signal lines between said node and the following node.

9. A series control system as claimed in claim 8, in which said first and second wire break detecting means operates to determine the occurrence of the breaking of wire when said frame signal is not received for a predetermined period of time longer than said predetermined period.

10. A series control system in which a plurality of nodes each having at least a terminal and a main controller for controlling said plurality of nodes are connected in series to one another, and said main controller outputs a frame signal at a predetermined period which includes output data to be applied to said terminal of said node, and each node operates to add input data provided by the terminal thereof to input and output data included in said frame signal received through the preceding node, or extract therefrom output data to be applied to said terminal thereof, and transmits said frame signal thus processed to the following node, in which

said plurality of nodes and said main controller are series-connected to one another through two signal lines,

a wire break flag region indicating whether or not said two signal lines are broken, and a wire break position code region indicating the position of the breaking of wire of said signal

45

lines are provided in said frame signal, and said main controller outputs said frame signal with said wire break flag region and wire break position code region set initially, and

each node comprising:

first and second wire break detecting means for detecting whether or not said two signals lines are broken between said node and the preceding node, respectively;

wire break frame signal generating means for producing a wire break frame signal which includes a predetermined wire break code indicating the breaking of wire of said two signal lines and a wire break position code set initially;

first and second flag setting means for setting, in response to detection outputs of said first and second wire break detecting means, the corresponding flag in said frame signal inputted thereto through said first and second signal lines;

first and second wire break flag detecting means for detecting the setting of said wire break flag in said frame signal which is applied to said node through said first and second signal lines;

first and second wire break frame detecting means for detecting the inputting of said wire break frame signal to said node with respect to said first and second signal lines, respectively;

first and second addition means for subjecting, in response to detection outputs of said first and second wire break flag detecting means, said wire break position codes in said frame signal to +1 addition which is applied to said node through

46

said first and second signal lines, and subjecting, in response to detection outputs of said first and second wire break frame detecting means, said wire break position codes in said wire break frame signal to +1 addition which is applied to said node through said first and second signal lines; and

signal switching means which, according to detection outputs of said first and second wire break detecting means,

when none of said two signal wires are broken, transmits data frame signals from said two signal lines to the corresponding two signal lines between said node and the following node,

when one of said two signal wires is broken, transmits said data frame signal provided by said signal wire which is not broken to said two signal wires between said node and the following node, and

when both of said two signal wires are broken, transmits said wire break frame signal thus formed to said two signal lines between said node and the following node.

English translation of amended claims.

CLAIMS

1.(Amended)A series control system in which a plurality of nodes each having at least a terminal and a main controller for controlling said plurality of nodes are connected in series to one another, and each node is so designed that, when said node receives from the preceding node a frame signal including output data for said terminals of said nodes which is outputted by said main controller with a predetermined period, said node extracts the output data from said frame signal which is provided for the terminal of said node, and applies said output data thus extracted to said terminal, and applies to the following node said frame signal from which said output data has been extracted, in which

said plurality of nodes and said main controller are series-connected with two signal lines, and

each node comprises:

first and second frame dropout detecting means which perform a detecting operation with respect to said two signal lines, respectively, in such a manner as to determine the occurrence of a frame dropout whenever said frame signal is not received through said signals lines for longer than said predetermined period; and

switching means for selecting one of said two signal lines according to outputs of said first and second frame dropout detecting means, and applying to said terminal thereof said output data included in said frame signal which is provided on said signal line thus selected,

said switching means selecting, when receiving detection signals from said first and second frame dropout detecting means, the signal line with which a frame dropout has occurred later.

2. Canceled

3. Canceled

4. Canceled

Claims 5 - 10 are retained unchanged.

49

**FIG.1**

EP 0 383 946 A1

**FIG.2**

EP 0 383 946 A1

EP 0 383 946 A1

| ST | DL | Din | Din-1 | Din-2 | ⋯ | DO3 | DO2 | DO1 | SP | ERR |

INPUT DATA (FROM SENSORS)　　OUTPUT DATA (FROM ACTUATORS)

## FIG. 3

| ST | DL(5) | O | O | 1 | O | 1 | SP | ERR |

10

2

NODE

"ON"

| ST | DL(4) | O | O | 1 | O | SP | ERR | →

## FIG. 4

| ST | DL(5) | O | O | 1 | O | 1 | SP | ERR |

1

NODE

"ON"

| ST | DL(6) | 1 | O | O | 1 | O | 1 | SP | ERR |

## FIG. 5

**FIG.6**

ST    ST    ST    ST

T

2T

**FIG.7**

S1

S2

50

51

52

53

54

55

56

D

Q

CK

CK

Sa

x

y

61

62

63

64

65

D1

D2

Z

E

SW1

**FIG.8**

**FIG. 9**

| ST | DL | DATA | SP | CRC | ERR | BRK1 | BRK2 |
|---|---|---|---|---|---|---|---|

## FIG.10

WIRE BREAK FRAME SIGNAL

| BRKW | BWD |
|---|---|

## FIG.11

BRK₁       BRK₂

| ERR | 1 | O | O | O | O | O | O | O | O | O | - - - - - - - - | O |

WIRE BREAK
FLAG BIT BF₁

WIRE BREAK
POSITION
DATA BD₁

WIRE BREAK
FLAG BIT BF₂

WIRE BREAK
POSITION
DATA BD₂

# FIG.12

Se
J
J′

81

85

S   Q
R

G

FROM SIGNAL
RECEIVING
CIRCUIT 20

82

"L"
DETECTING

83

84

1-BIT
DELAY

80 , 80′

# FIG.13

EP 0 383 946 A1

BWD

**(a)** OUTPUT OF SIGNAL RECEIVING CIRCUIT 20 AND DATA PROCESSING CIRCUIT 25 (WIRE BREAK FRAME SIGNAL)

BRKW | 1 1 0 1 1 0 ----- 0

**(b)** BOTH LOOPS WIRE BREAK CODE DETECTION OUTPUT Se

**(c)** OUTPUT OF "L" DETECTING CIRCUIT 82

**(d)** OUTPUT OF AND GATE 83

**(e)** OUTPUT OF 1-BIT DELAY

**(f)** OUTPUT G OF SR FLIP-FLOP 85

**(g)** OUTPUT Aα OF EXOR 91

WIRE BREAK CODE | 0 0 1 1 1 0 ----- 0

FOR WIRE FRAME SIGNAL

**FIG.14**

(a) OUTPUT OF SIGNAL RECEIVING CIRCUIT 20 AND DATA PROCESSING CIRCUIT 25 (DATA FRAME SIGNAL)

(b) WIRE BREAK FLAG BIT DETECTION OUTPUT

(c) OUTPUT OF "L" DETECTING CIRCUIT 82

(d) OUTPUT OF AND GATE 83

(e) OUTPUT OF 1-BIT DELAY

(f) OUTPUT G OF FLIP-FLOP 85

(g) OUTPUT Aα OF EXOR 91

FOR DATA FRAME

FIG.15

EP 0 383 946 A1

**FIG.16**

FIG.17

EP 0 383 946 A1

**(a)** MAIN CONTROLLER OUTPUT | ERR | 0 0 0 0 0 --- 0 0 | 0 0 0 0 0 --- 0 0 |

**(b)** NODE 10-1 OUTPUT | ERR | 1 0 0 0 0 --- 0 0 | 0 0 0 0 0 --- 0 0 |

**(c)** NODE 10-2 OUTPUT | ERR | 1 1 0 0 0 --- 0 0 | 0 0 0 0 0 --- 0 0 |

**(d)** NODE 10-3 OUTPUT | ERR | 1 0 1 0 0 --- 0 0 | 1 0 0 0 0 --- 0 0 |

**(e)** NODE 10-4 OUTPUT | ERR | 1 1 1 0 0 --- 0 0 | 1 1 0 0 0 --- 0 0 |

**(f)** NODE 10-(n-1) OUTPUT | ERR | 1 1 1 1 0 --- 1 0 | 1 1 0 1 0 --- 1 0 |

**(g)** NODE 10-n OUTPUT | ERR | 1 0 0 0 1 --- 1 0 | 1 0 1 1 0 --- 1 0 |

**FIG.19**

**FIG.18**

**FIG.20**

WIRE BREAK POSITION DATA BWD

**(a)** NODE 10-2 OUTPUT

| BRKW | OOO ------- O |

**(b)** NODE 10-3 OUTPUT

| BRKW | IOO -------O |

**(c)** NODE 10-4 OUTPUT

| BRKW | OIO --------O |

**(d)** NODE 10-5 OUTPUT

| BRKW | IIO -------O |

**(e)** NODE 10-n OUTPUT

| BRKW | OOIIIO ---O |

# FIG.21

| ST | SP | ERR |
|---|---|---|

| ST | Di₁ | SP | ERR |
|---|---|---|---|

| ST | Di₂ | Di₁ | SP | ERR |
|---|---|---|---|---|

| ST | Din | --- | Di₂ | Di₁ | SP | ERR |
|---|---|---|---|---|---|---|

DATA FRAME SECTION

**FIG.22**

DATA FRAME SECTION

| ST | DO₁ | DO₂ | DO₃ | --- | DOn | SP | ERR |
|---|---|---|---|---|---|---|---|

| ST | DO₂ | DO₃ | --- | DOn | SP | ERR |
|---|---|---|---|---|---|---|

| ST | DO₃ | --- | DOn | SP | ERR |
|---|---|---|---|---|---|

| ST | SP | ERR |
|---|---|---|

**FIG.23**

| STI | | Di | STO | | DO | SP | ERR |
|-----|---|----|----|---|----|----|-----|

↑ Diq          ↑ DOq

## FIG.24

|  | DF1 | DF2 | DF3 | DF4 | DF5 |  |  |
|--|-----|-----|-----|-----|-----|--|--|

| ST | DO1 | DO2 | DO3 | DO4 | DO5 | SP | ERR |
|----|-----|-----|-----|-----|-----|----|-----|

| ST | Di1 | DO2 | DO3 | DO4 | DO5 | SP | ERR |
|----|-----|-----|-----|-----|-----|----|-----|

| ST | Di1 | Di2 | DO3 | DO4 | DO5 | SP | ERR |
|----|-----|-----|-----|-----|-----|----|-----|

| ST | Di1 | Di2 | Di3 | Di4 | Di5 | SP | ERR |
|----|-----|-----|-----|-----|-----|----|-----|

## FIG.25

✕; WIRE BREAK   ——— MAIN LOOP
               ---- SUB LOOP

## FIG.26

# INTERNATIONAL SEARCH REPORT

International Application No PCT/JP89/00861

**I. CLASSIFICATION OF SUBJECT MATTER** (if several classification symbols apply, indicate all) 6

According to International Patent Classification (IPC) or to both National Classification and IPC

Int. Cl$^4$      H04L11/00, 1/22

**II. FIELDS SEARCHED**

| Minimum Documentation Searched 7 | |
|---|---|
| Classification System | Classification Symbols |
| IPC | H04L11/00, 1/22 |

| Documentation Searched other than Minimum Documentation to the Extent that such Documents are Included in the Fields Searched 8 |
|---|
| Jitsuyo Shinan Koho            1978 - 1988 |
| Kokai Jitsuyo Shinan Koho      1978 - 1988 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| Y | JP, A, 58-73260 (Seikosha Co., Ltd.) 2 May 1983 (02. 05. 83) Claim, page 3, upper right column, line 1 to page 4, upper right column, line 16, Figs. 1, 4 to 7 & GB, A1, 2111271 | 1 - 3 |
| Y | JP, A, 62-61447 (Fujitsu Daiichi Tsushin Software Kabushiki Kaisha) 18 March 1987 (18. 03. 87) Page 2, upper left column, line 14 to lower left column, line 1, Fig. 2 (Family : none) | 1 - 3 |
| A | JP, A, 58-73260 (Seikosha Co., Ltd.) 2 May 1983 (02. 05. 83) & GB, A1, 2111271 | 4 - 10 |
| A | JP, A, 62-61447 (Fujitsu Daiichi Tsushin Software Kabushiki Kaisha) 18 March 1987 (18. 03. 87) (Family : none) | 4 - 10 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| November 10, 1989 (10. 11. 89) | November 27, 1989 (27. 11. 89) |
| International Searching Authority | Signature of Authorized Officer |
| Japanese Patent Office | |

Form PCT/ISA/210 (second sheet) (January 1985)

International Application No  PCT/JP89/00861

| FURTHER INFORMATION CONTINUED FROM THE SECOND SHEET |

A  JP, A, 62-175045 (NEC Corporation)  8 - 10
31 July 1987 (31. 07. 87)
(Family : none)

A  JP, A, 61-224750 (Fujitsu Ltd.)  10
6 October 1986 (06. 10. 86)
(Family : none)

---

V.☐ OBSERVATIONS WHERE CERTAIN CLAIMS WERE FOUND UNSEARCHABLE ¹

This international search report has not been established in respect of certain claims under Article 17(2) (a) for the following reasons:

1.☐ Claim numbers ......., because they relate to subject matter not required to be searched by this Authority, namely:

2.☐ Claim numbers ......., because they relate to parts of the international application that do not comply with the prescribed requirements to such an extent that no meaningful international search can be carried out, specifically:

3.☐ Claim numbers . ......., because they are dependent claims and are not drafted in accordance with the second and third sentences of PCT Rule 6.4(a).

---

VI.☐ OBSERVATIONS WHERE UNITY OF INVENTION IS LACKING ²

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)